(19) **Europäisches Patentamt**

**European Patent Office**

**Office européen des brevets**

(11) **EP 1 691 314 A2**

(12) **EUROPEAN PATENT APPLICATION**

(43) Date of publication:
16.08.2006 Bulletin 2006/33

(51) Int Cl.:
*G06F 21/00* (2006.01)

(21) Application number: 06001039.4

(22) Date of filing: 18.01.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 12.02.2005 US 652439 P
14.12.2005 US 302930

(71) Applicant: Broadcom Corporation
Irvine, CA 92618-7013 (US)

(72) Inventors:
• Barlow, Stephen J.
Irvine
California 92618-7013 (US)

• Ulrich, Rainer
Irvine
California 92618-7013 (US)
• Chevally de Rivaz, Peter Francis
Irvine
California 92618-7013 (US)

(74) Representative: Jehle, Volker Armin
Bosch Graf von Stosch Jehle
Patentanwaltsgesellschaft mbH
Flüggenstrasse 13
80639 München (DE)

(54) **Method and system for data protection in a mobile multimedia processor**

(57) Certain aspects of a method and system for protecting data during mobile communication may comprise a mobile multimedia processor that decrypts an encrypted algorithm in hardware within the mobile multimedia processor. The mobile multimedia processor may be adapted to utilize the decrypted algorithm to decrypt data in software. The mobile multimedia processor may be adapted to decrypt instructions for the encrypted algorithm as the instructions enter an instruction cache. The mobile multimedia processor may be adapted to protect the decrypted data by performing a hash operation of the decrypted data and check a result of the hash operation.

FIG. 1A

EP 1 691 314 A2

**Description**

CROSS-REFERENCE TO RELATED APPLICATIONS/INCORPORATION BY REFERENCE

This application makes reference to, claims priority to, and claims the benefit of United States Provisional Patent Application Serial No. 60/652439 (Attorney Docket No. 16433US01), filed on February 12, 2005.

This application makes reference to United States Application Serial No. _____ (Attorney Docket No. 16435US02) filed on even date herewith.

The above stated application is hereby incorporated herein by reference in its entirety.

FIELD OF THE INVENTION

Certain embodiments of the invention relate to mobile multimedia processors. More specifically, certain embodiments of the invention relate to a method and system for digital rights management in a mobile multimedia processor.

BACKGROUND OF THE INVENTION

Mobile communications have changed the way people communicate and mobile phones have been transformed from a luxury item to an essential part of every day life. The use of mobile phones today is dictated by social situations, rather than hampered by location or technology. While voice connections fulfill the basic need to communicate, and mobile voice connections continue to filter even further into the fabric of every day life, various integrated mobile multimedia applications, utilizing the mobile Internet, is the next step in the mobile communication revolution.

Third generation (3G) cellular networks offering various high speed access technologies and mobile telephones that have been specifically designed to utilize these technologies, fulfill demands for integrated multimedia applications supporting TV and audio applications utilizing advanced compression standards, high-resolution gaming applications, musical interfaces, peripheral interface support, etc. The processing requirements are being increased as chip designers take advantage of compression and higher bandwidths to transmit more information. For example, 3G wireless applications support bit rates from 384 kilobits (Kbits)/second to 2 megabits (Mbits)/second, allowing chip designers to provide wireless systems with multimedia capabilities, superior quality, reduced interference, and a wider coverage area.

As mobile multimedia services grow in popularity and usage, factors such as power consumption, cost efficient optimization of network capacity and quality of service (QoS) will become even more essential to cellular operators than it is today. These factors may be achieved with careful network planning and operation, improvements in transmission methods, and advances in receiver techniques and chip integration solutions. To this end, carriers need technologies that will allow them to increase downlink throughput for the mobile multimedia applications support and, in turn, offer advanced QoS capabilities and speeds for consumers of mobile multimedia application services. Currently, mobile multimedia processors don't fully exploit system-on-a-chip (SOC) integration for advanced total system solution for today's mobile handsets. For example, conventional mobile processors may utilize a plurality of hardware accelerators to enable a variety of multimedia applications, which significantly increases power consumption, implementation complexity, mobile processor real estate, and ultimately terminal size. The content owners may insist on digital rights management (DRM) and the algorithm or parts of it may have to be kept secret. Nevertheless, periodic updates and modifications may be required.

Further limitations and disadvantages of conventional and traditional approaches will become apparent to one of skill in the art, through comparison of such systems with some aspects of the present invention as set forth in the remainder of the present application with reference to the drawings.

BRIEF SUMMARY OF THE INVENTION

A system and/or method is provided for digital right management in a mobile multimedia processor, substantially as shown in and/or described in connection with at least one of the figures, as set forth more completely in the claims. According to an aspect of the invention, a method for protecting data during mobile communication is provided, the method comprising:

decrypting an encrypted algorithm in hardware of a multimedia mobile processor; and
utilizing said decrypted algorithm to decrypt data handled by said mobile multimedia processor in software.

Advantageously, the method further comprises decrypting instructions for said algorithm as said instructions enter an instruction cache.

Advantageously, the method further comprises:

protecting said decrypted data by performing a hash operation of said decrypted data; and
checking a result of said hash operation.

Advantageously, the method further comprises storing a decryption key to said encrypted algorithm in write-only mode in said hardware of said mobile multimedia processor.

Advantageously, the method further comprises utilizing said stored decryption key to decrypt said encrypted algorithm in said hardware of said mobile multimedia processor.

Advantageously, the method further comprises obscuring a location of said stored decryption key.

Advantageously, the method further comprises disabling at least one interrupt before said decryption of said encrypted algorithm.

Advantageously, the method further comprises enabling at least one interrupt after said decryption of said encrypted algorithm.

Advantageously, the method further comprises inserting an unused memory line between said decrypted data and said decrypted algorithm to prevent corruption of said decrypted data.

According to an aspect of the invention, a machine-readable storage is provided having stored thereon, a computer program having at least one code section for protecting data during mobile communication, the at least one code section being executable by a machine for causing the machine to perform steps comprising:

decrypting an encrypted algorithm in hardware of a multimedia mobile processor; and

utilizing said decrypted algorithm to decrypt data handled by said mobile multimedia processor in software.

Advantageously, the machine-readable storage further comprises code for decrypting instructions for said algorithm as said instructions enter an instruction cache.

Advantageously, the machine-readable storage further comprises code for:

protecting said decrypted data by performing a hash operation of said decrypted data; and
checking a result of said hash operation.

Advantageously, the machine-readable storage further comprises code for storing a decryption key to said encrypted algorithm in write-only mode in said hardware of said mobile multimedia processor.

Advantageously, the machine-readable storage further comprises code for utilizing said stored decryption key to decrypt said encrypted algorithm in said hardware of said mobile multimedia processor.

Advantageously, the machine-readable storage further comprises code for obscuring a location of said stored decryption key.

Advantageously, the machine-readable storage further comprises code for disabling at least one interrupt before said decryption of said encrypted algorithm.

Advantageously, the machine-readable storage further comprises code for enabling at least one interrupt after said decryption of said encrypted algorithm.

Advantageously, the machine-readable storage further comprises code for inserting an unused memory line between said decrypted data and said decrypted algorithm to prevent corruption of said decrypted data.

According to an aspect of the invention, a system for protecting data during mobile communication is provided, the system comprising:

a mobile multimedia processor that decrypts an encrypted algorithm in hardware of said mobile multimedia processor; and
said mobile multimedia processor utilizes said decrypted algorithm to decrypt data handled by said mobile multimedia processor in software.

Advantageously, said mobile multimedia processor decrypts instructions for said algorithm as said instructions enter an instruction cache.

Advantageously, said mobile multimedia processor that protects said decrypted data by performing a hash operation of said decrypted data; and
said mobile multimedia processor that checks a result of said hash operation.

Advantageously, said mobile multimedia processor stores a decryption key to said encrypted algorithm in write-only mode in said hardware of said mobile multimedia processor.

Advantageously, said mobile multimedia processor utilizes said stored decryption key to decrypt said encrypted algorithm in said hardware of said mobile multimedia processor.

Advantageously, said mobile multimedia processor obscures a location of said stored decryption key.

Advantageously, said mobile multimedia processor disables at least one interrupt before said decryption of said encrypted algorithm.

Advantageously, said mobile multimedia processor enables at least one interrupt after said decryption of said encrypted algorithm.

Advantageously, said mobile multimedia processor inserts an unused memory line between said decrypted data and said decrypted algorithm to prevent corruption of said decrypted data.

These and other advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG. 1A is a block diagram of an exemplary mobile multimedia system, in accordance with an embodiment of the invention.

FIG. 1B is a block diagram of an exemplary mobile multimedia processor, in accordance with an embodiment of the invention.

FIG. 2 is a block diagram of an exemplary system for code decryption, in accordance with an embodiment of the invention.

FIG. 3 is a block diagram of an exemplary system for code decryption, in accordance with an embodiment of the invention.

FIG. 4 is a flow diagram illustrating program flow within a memory stack when an encrypted code is executed, in accordance with an embodiment of the invention.

FIG. 5 is a flowchart illustrating exemplary steps for protecting data during mobile communication, in accordance with an embodiment of the invention.

DETAILED DESCRIPTION OF THE INVENTION

In accordance with an embodiment of the invention, a method and system for protecting data during mobile communication may comprise a mobile multimedia processor that decrypts an encrypted algorithm in hardware within the mobile multimedia processor. The mobile multimedia processor may be adapted to utilize the decrypted algorithm to decrypt data in software. The mobile multimedia processor may be adapted to decrypt instructions for the encrypted algorithm as the instructions enter an instruction cache within the mobile multimedia processor. The mobile multimedia processor may be adapted to protect the plain-text code by performing a hash operation of the plain-text code and check a result of the hash operation within the mobile multimedia processor. The use of encrypted code protects the plain-text code from modifications.

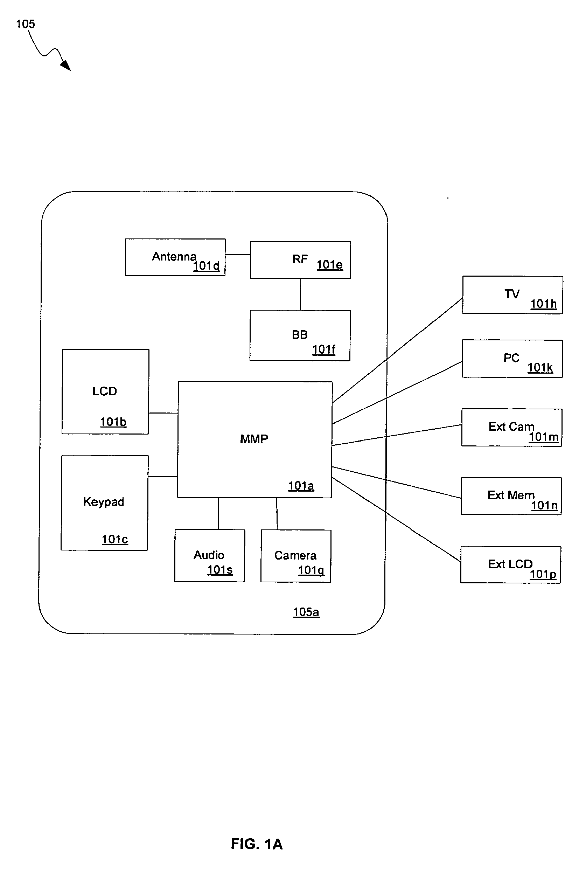

FIG. 1A is a block diagram of an exemplary mobile multimedia system, in accordance with an embodiment of the invention. Referring to FIG. 1A, there is shown a mobile multimedia system 105 that comprises a mobile multimedia device 105a, a TV 101 h, a PC 101 k, an external camera 101 m, external memory 101 n, and external LCD display 101 p. The mobile multimedia device 105a may be a cellular telephone or other handheld communication device. The mobile multimedia device 105a may comprise a mobile multimedia processor (MMP) 101a, an antenna 101d, an audio block 101s, a radio frequency (RF) block 101e, a baseband processing block 101f, an LCD display 101 b, a keypad 101 c, and a camera 101 g.

The MMP 101a may comprise suitable circuitry, logic, and/or code and may be adapted to perform video and/or multimedia processing for the mobile multimedia device 105a. The MMP 101a may further comprise a plurality of integrated interfaces, which may be utilized to support one or more external devices coupled to the mobile multimedia device 105a. For example, the MMP 101a may support connections to a TV 101 h, a PC 101 k, ah external camera 101 m, external memory 101 n, and an external LCD display 101 p.

In operation, the mobile multimedia device may receive signals via the antenna 101d. Received signals may be processed by the RF block 101e and the RF signals may be converted to baseband by the baseband processing block 101f. Baseband signals may then be processed by the MMP 101 a. Audio and/or video signals may also be received via/ transmitted to the integrated camera 101g, the TV 101h, the PC 101 k, and/or the external camera 101m. During processing, the MMP 101a may utilize the external memory 101n for storing of processed data. Processed audio data may be communicated to the audio block 101s and processed video data may be communicated to the TV 101h, LCD 101 b or the external LCD 101p, for example. The keypad 101c may be utilized for communicating processing commands and/or other data, which may be required for audio or video data processing by the MMP 101a.

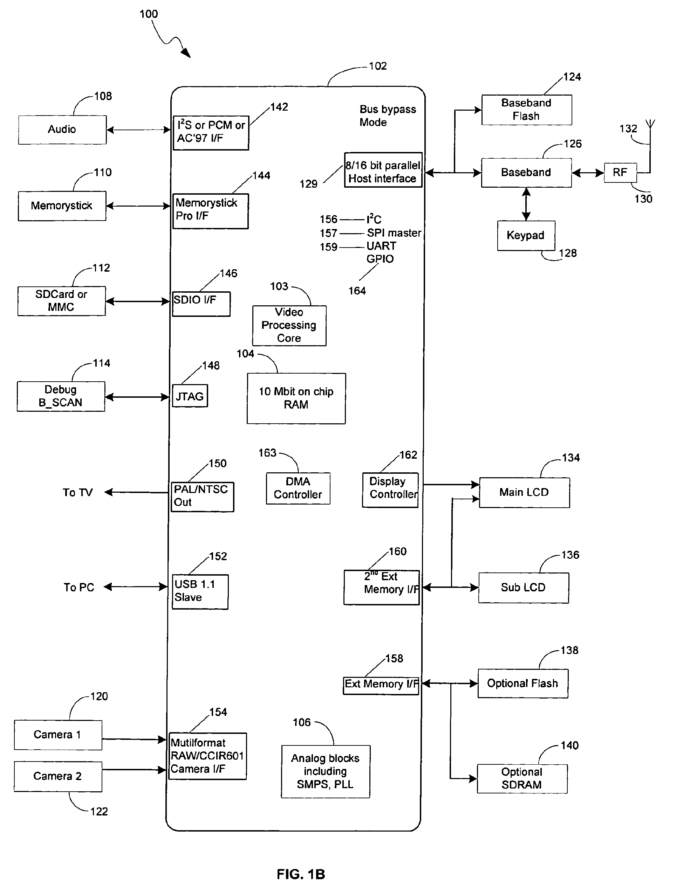

FIG. 1B is a block diagram of an exemplary mobile multimedia processor, in accordance with an embodiment of the invention. Referring to FIG. 1B, the mobile multimedia processor 102 may comprise suitable logic, circuitry and/or code that may be adapted to perform video and/or multimedia processing for handheld multimedia products. For example, the mobile multimedia processor 102 may be designed and optimized for video record/playback, mobile TV and 3D mobile gaming, utilizing integrated peripherals and a video processing core. The mobile multimedia processor 102 may comprise a video processing core 103, RAM 104, an analog block 106, a direct memory access (DMA) controller 163, an audio interface (I/F) 142, a memory stick I/F 144, secure digital (SD) card I/F 146, JTAG I/F 148, TV output I/F 150, USB I/F 152, a camera I/F 154, a host I/F 129, and an integrated-integrated circuit ($I^2C$) I/F 156. The mobile multimedia processor 102 may further comprise a serial peripheral interface (SPI) 157, a universal asynchronous receiver/transmitter (UART) I/F 159, general purpose input/output (GPIO) pins 164, a display controller 162, an external memory I/F 158, and a second external memory I/F 160.

The video processing core 103 may comprise suitable circuitry, logic, and/or code and may be adapted to perform video processing of data. The RAM 104 may comprise suitable logic, circuitry and/or code that may be adapted to store on-chip data such as video data. In an exemplary embodiment of the invention, the RAM 104 may be adapted to store 10 Mbits of on-chip data, for example. The size of the on-chip RAM 104 may vary depending on cost or other factors such as chip size.

The analog block 106 may comprise a switch mode power supply (SMPS) block and a phase locked loop (PLL) block. In addition, the analog block 106 may comprise an on-chip SMPS controller, which may be adapted to generate its core voltage. The core voltage may be software programmable according to, for example, speed demands on the mobile multimedia processor 102, allowing further control of power management.

In an exemplary embodiment of the invention, the normal core operating range may be about 0.8 V - 1.2 V and may be reduced to about 0.6 V during hibernate mode. The analog block 106 may also comprise a plurality of PLL's that may be adapted to generate about 195 kHz - 200 MHz clocks, for example, for external devices. Other voltages and clock speeds may be utilized depending on the type of application. The mobile multimedia processor 102 may comprise a plurality of power modes of operation, for example, run, sleep, hibernate and power down. In accordance with an embodiment of the invention, the mobile multimedia processor 102 may comprise a bypass mode that may allow a host to access memory mapped peripherals in power down mode, for example. The mobile multimedia processor 102 may be adapted to directly control the display during normal operation in bypass mode. A host may be able to maintain the display while the mobile multimedia processor 102 is in standby mode.

The audio block 108 may comprise suitable logic, circuitry and/or code that may be adapted to communicate with the mobile multimedia processor 102 via an inter-IC sound ($I^2S$), pulse code modulation (PCM) or audio codec (AC'97) interface 142 or other suitable interface, for example. In the case of an AC'97 and/or an $I^2S$ interface, suitable audio controller, processor and/or circuitry may be adapted to provide AC'97 and/or $I^2S$ audio output respectively, in either master or slave mode. In the case of the PCM interface, a suitable audio controller, processor and/or circuitry may be adapted to allow input and output of telephony or high quality stereo audio. The PCM audio controller, processor and/or circuitry may comprise independent transmit and receive first in first out (FIFO) buffers and may use DMA to further reduce processor overhead. The audio block 108 may also comprise an audio in, audio out port and a speaker/ microphone port (not illustrated in FIG. 1 B).

The mobile multimedia device 100 may comprise at least one portable memory input/output (I/O) block. In this regard, the memorystick block 110 may comprise suitable logic, circuitry and/or code that may be adapted to communicate with the mobile multimedia processor 102 via a memorystick pro interface 144, for example. The SD card block 112 may comprise suitable logic, circuitry and/or code that may be adapted to communicate with the mobile multimedia processor 102 via a SD input/output (I/O) interface 146, for example. A multimedia card (MMC) may also be utilized to communicate with the mobile multimedia processor 102 via the SD input/output (I/O) interface 146, for example. The mobile multimedia device 100 may comprise other portable memory I/O blocks such an SD I/O card.

The debug block 114 may comprise suitable logic, circuitry and/or code that may be adapted to communicate with the mobile multimedia processor 102 via a joint test action group (JTAG) interface 148, for example. The debug block 114 may be adapted to access the address space of the mobile multimedia processor 102 and may be adapted to perform boundary scan via an emulation interface. Other test access ports (TAPs) may be utilized. The phase alternate line (PAL)/ national television standards committee (NTSC) TV output I/F 150 may be utilized for communication with a TV, and the universal serial bus (USB) 1.1, or other variant thereof, slave port I/F 152 may be utilized for communications with a PC, for example. The cameras 120 and/or 122 may comprise suitable logic, circuitry and/or code that may be adapted to communicate with the mobile multimedia processor 102 via a multiformat raw CCIR 601 camera interface 154, for example. The camera I/F 154 may utilize windowing and sub-sampling functions, for example, to connect the mobile multimedia processor 102 to a mobile TV front end.

The mobile multimedia processor 102 may also comprise a plurality of serial interfaces, such as the USB I/F 152, an inter-integrated circuit ($I^2C$) master I/F 156, a serial peripheral interface (SPI) 157, and a universal asynchronous receiver/transmitter (UART) I/F 159 for Bluetooth or IrDA. The $I^2C$ master interface 156 may comprise suitable circuitry, logic, and/or code and may be adapted to control image sensors and may be a connected to smart batteries and other peripherals. The SPI master interface 157 may comprise suitable circuitry, logic, and/or code and may be utilized to control image sensors. Two chip selects may be provided, for example, to work in a polled mode with interrupts or via a DMA controller 163. Furthermore, the mobile multimedia processor 102 may comprise a plurality of general purpose I/O (GPIO) pins 164, which may be utilized for user defined I/O or to connect to the internal peripherals. The display controller 162 may comprise suitable circuitry, logic, and/or code and may be adapted to support multiple displays with XGA resolution, for example, and to handle 8/9/16/18/21-bit video data.

The baseband flash memory 124 may be adapted to receive data from the mobile multimedia processor 102 via an 8/16 bit parallel host interface 129, for example. The host interface 129 may be adapted to provide two channels with independent address and data registers through which a host processor may read and/or write directly to the memory space of the mobile multimedia processor 102. The baseband processing block 126 may comprise suitable logic, circuitry and/or code that may be adapted to convert RF signals to baseband and communicate the baseband processed signals to the mobile multimedia processor 102 via the host interface 129, for example. The RF processing block 130 may comprise suitable logic, circuitry and/or code that may be adapted to receive signals via the antenna 132 and to communicate RF signals to the baseband processing block 126. The host interface 129 may comprise a dual software channel with a power efficient bypass mode.

The main LCD 134 may be adapted to receive data from the mobile multimedia processor 102 via a display controller 162 and/or from a second external memory interface 160, for example. The display controller 162 may comprise suitable logic, circuitry and/or code and may be adapted to drive an internal TV out function or be connected to a range of LCD's. The display controller 162 may be adapted to support a range of screen buffer formats and may utilize direct memory access (DMA) to access the buffer directly and increase video processing efficiency of the video processing core 103. Both NTSC and PAL raster formats may be generated by the display controller 162 for driving the TV out. Other formats, for example SECAM, may also be supported

In one embodiment of the invention, the display controller 162 may be adapted to support a plurality of displays, such as an interlaced display, for example a TV, and/or a non-interlaced display, such as an LCD. The display controller 162 may also recognize and communicate a display type to the DMA controller 163. In this regard, the DMA controller 163 may be fetch video data in an interlaced or non-interlaced fashion for communication to an interlaced or non-interlaced display coupled to the mobile multimedia processor 102 via the display controller 162.

The substitute LCD 136 may comprise suitable logic, circuitry and/or code that may be adapted to communicate with the mobile multimedia processor 102 via a second external memory interface, for example. The mobile multimedia processor 102 may comprise a RGB external data bus. The mobile multimedia processor 102 may be adapted to scale image output with pixel level interpolation and a configurable refresh rate.

The optional flash memory 138 may comprise suitable logic, circuitry and/or code that may be adapted to communicate with the mobile multimedia processor 102 via an external memory interface 158, for example. The optional SDRAM 140 may comprise suitable logic, circuitry and/or code that may be adapted to receive data from the mobile multimedia processor 102 via the external memory interface 158, for example. The external memory I/F 158 may be utilized by the mobile multimedia processor 102 to connect to external SDRAM 140, SRAM, Flash memory 138, and/or external peripherals, for example. Control and timing information for the SDRAM 140 and other asynchronous devices may be configurable by the mobile multimedia processor 102.

The mobile multimedia processor 102 may further comprise a secondary memory interface 160 to connect to connect to memory-mapped LCD and external peripherals, for example. The secondary memory interface 160 may comprise suitable circuitry, logic, and/or code and may be utilized to connect the mobile multimedia processor 102 to slower devices without compromising the speed of external memory access. The secondary memory interface 160 may provide 16 data lines, for example, 6 chip select/address lines, and programmable bus timing for setup, access and hold times, for example. The mobile multimedia processor 102 may be adapted to provide support for NAND/NOR Flash including NAND boot and high speed direct memory access (DMA), for example.

In operation, the mobile multimedia processor 102 may be adapted to support multiple display formats for displaying processed video data. For example, interlaced and/or non-interlaced external displays may be connected to the mobile multimedia processor 102 via the display controller 162. The display controller 162 may communicate the external display type to the DMA controller 163. The DMA controller 163 may then access the on-chip RAM 104 and may fetch processed video data in an interlaced or non-interlaced format, corresponding to the external display type.

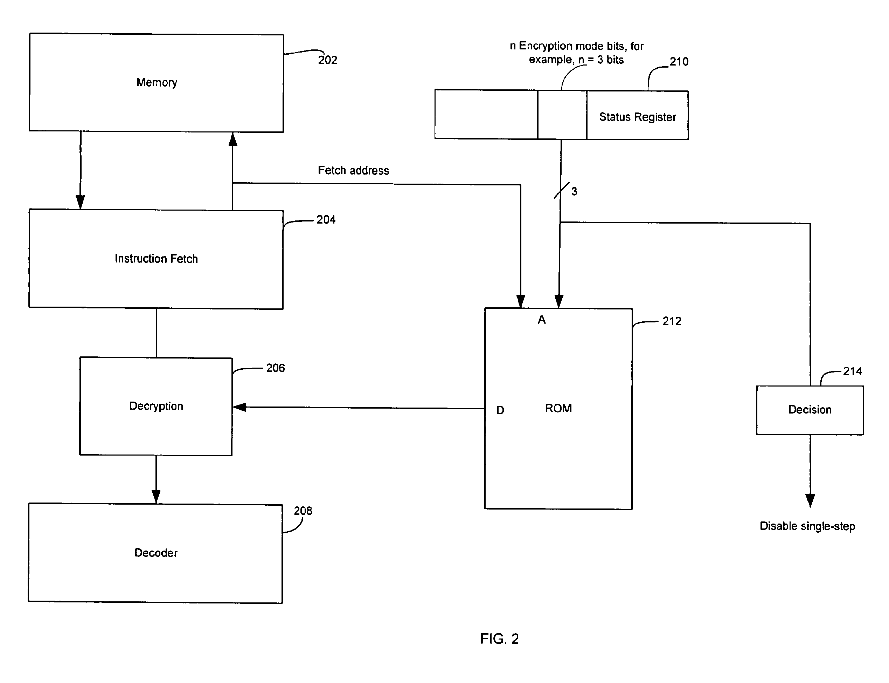

FIG. 2 is a block diagram of an exemplary system for code decryption, in accordance with an embodiment of the invention. Referring to FIG. 2, there is shown a memory block 202, an instruction fetch block 204, a decryption block 206, a decoder block 208, a status register 210, a read only memory (ROM) 212 and a decision block 214.

The memory block 202 may comprise suitable logic, circuitry and/or code that may be adapted to store data and/or instructions for use. The memory block 202 may be coupled to the instruction fetch block 204. The instruction fetch block 204 may comprise suitable logic, circuitry and/or code that may be adapted to fetch instructions from the memory block 202 and may store instructions in the memory block 202 and/or the ROM 212. The decryption block 206 may comprise suitable logic, circuitry and/or code that may be adapted to receive instructions and/or data from the instruction fetch block 204 and the ROM 212. The decryption block 206 may be adapted to modify the order of data received and transmit a set of instructions and/or data to the decoder block 208. The decoder block 208 may comprise suitable logic, circuitry and/or code that may be adapted to receive data and/or instructions from the decryption block 206 and execute them.

The status register 210 may comprise suitable logic, circuitry and/or code that may be adapted to receive, hold and/or transfer data and/or instructions to the ROM 212. The status register 210 may also be adapted to hold an address of a storage location or hold data that may be retrieved or sent to storage. The ROM 212 may comprise suitable logic, circuitry and/or code that may be adapted to receive a set of data and/or instructions from the instruction fetch block 204 and the status register 210. The ROM 212 may be adapted to store and/or transmit data to the decryption block 206. The decision block 214 may comprise suitable logic, circuitry and/or code that may be adapted to determine if a value of the status register 210 is greater than zero. If the value of the status register 210 is greater than zero, single-step debugging may be disabled.

A plurality of bits, for example 3 bits, E2 - E0 may be added to the status register 210. If the value of these 3 bits is zero, the processor may work in a normal mode of operation. If the value of these 3 bits is non-zero, they may define one of 7 encryption modes. The code may be decrypted as it is fed into the instruction decoder block 208. As a result, plain-text code may not be visible in the memory block 202 or in trace buffers, for example. Single-step debugging may be disabled to prevent single stepping through the code. The operation may be tracked by any changes in the contents of the status register 210 instead of tracking the operation by the instructions executed, for example. There may be several cycles of the one-time pad within the encrypted code as the size of the ROM 212 may be limited. Code relocatability may be dependent on, for example, the number of low order address bits used in the pad. The protected digital rights management (DRM) encryption algorithm may be embedded along with a device key for CPRM. The encryption algorithm may also be adapted to move code around and add extra instructions to obscure the location of the device key and to protect against an attack, where a hacker may collect multiple copies of the device key. In accordance with an embodiment of the invention, the encryption algorithm may also be adapted to protect the code against tampering by performing a hash of itself and check the result during various points during operation.

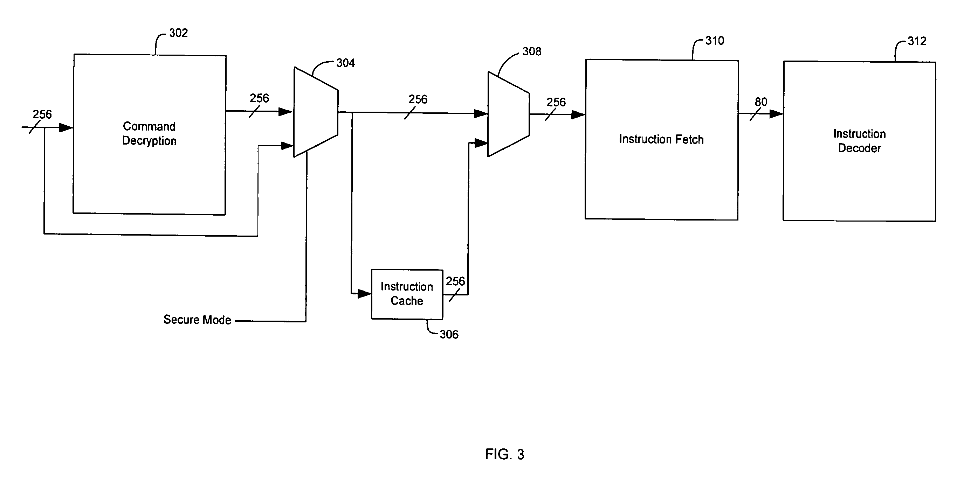

FIG. 3 is a block diagram of an exemplary system for code decryption, in accordance with an embodiment of the invention. Referring to FIG. 3, there is shown a command decryption block 302, a plurality of multiplexers MUX 304 and MUX 308, an instruction cache block 306, an instruction fetch block 310 and an instruction decoder block 312.

The command decryption block 302 may comprise suitable logic, circuitry and/or code that may be adapted to receive data, for example, 256 byte data and/or instructions and decrypt the code and/or data during a secure mode of operation. The MUX 304 may comprise suitable logic, circuitry and/or code that may be adapted to select between an encrypted instruction and/or data and a decrypted instruction and/or data from the command decryption block 302. When the MUX 304 is enabled in secure mode, it may be adapted to select a signal from the command decryption block 302. The instruction cache block 306 may comprise suitable logic, circuitry and/or code that may be adapted to store instructions temporarily for immediate access by the instruction fetch block 310. The data stored in the instruction cache block 306 may be, for example, 256 byte wide data. The MUX 304 may comprise suitable logic, circuitry and/or code that may be adapted to select between instructions and/or data from the instruction cache block 306 and directly from the MUX 304. The instruction fetch block 310 may comprise suitable logic, circuitry and/or code that may be adapted to fetch instructions from the memory. The instruction decoder block 312 may comprise suitable logic, circuitry and/or code that may be adapted to receive data and/or instructions from the instruction fetch block 310 and decode the data and/or instructions.

The command decryption block 302 may be adapted to handle a mixture of encrypted and plain text code. Interrupts may be handled by the plain text code. A plain text copy of the encrypted code may not be available as the instructions and/data stored in the instruction cache block 306 may be read only by the instruction decoder block 312. During code decryption, data lines to the instruction cache block 306 and/or the instruction decoder block 312 may be stalled until code decryption is finished. The code may be encrypted on a secure host and stored on a device. A key utilized to decrypt the code may be stored on a non-volatile RAM that may be written once and may be read by the command decryption block 302.

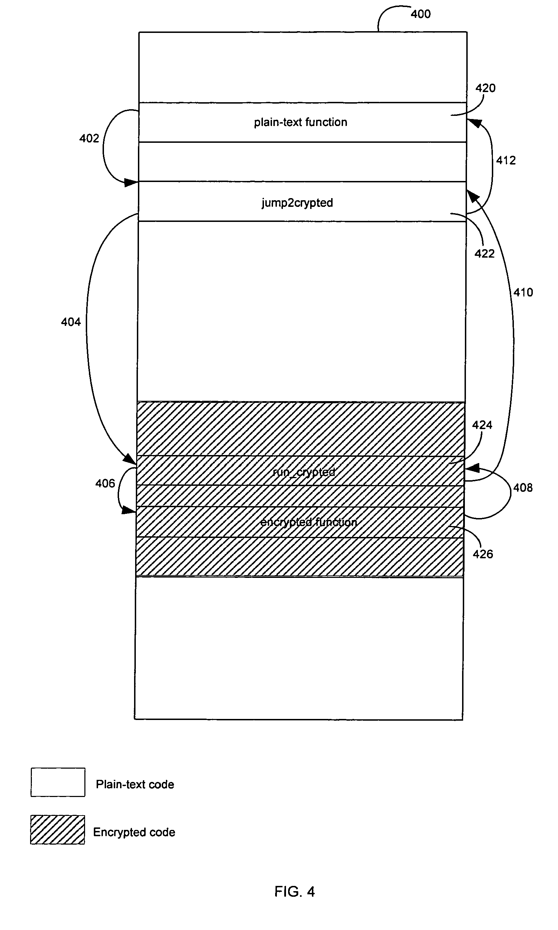

FIG. 4 is a flow diagram illustrating program flow within a memory stack when an encrypted code is executed, in accordance with an embodiment of the invention. Referring to FIG. 4, there is shown a memory stack 400, a plain-text function 420, a jump2crypted function 422, a run_crypted function 424 and an encrypted function 426.

The plain-text function 420 may comprise suitable logic and/or code that may be adapted to access an encrypted function 426. The jump2crypted function 422 may comprise suitable logic and/or code that may be adapted to switch on code decryption and call the run_crypted function 424. The jump2crypted function 422 may act as a wrapper for the run_crypted function 424. The run_crypted function 424 may comprise suitable logic and/or code that may be adapted to call the requested encrypted function 426. The encrypted function 426 may not be directly called from plain-text code, as the code decryption may not be switched on. If several different sections are utilized for encrypted code, each section may require its own jump2crypted function 422 and run_crypted function 424. The encrypted function 426 may not be adapted to call plain-text functions directly as the code decryption may not be switched off.

In step 402, the plain-text function 420 may access an encrypted function 426 by calling the jump2crypted function 422. In step 404, the jump2crypted function 422, which acts as a wrapper for the run_crypted function 424, may switch on code decryption and call the run_crypted function 424. In step 406, the run_crypted function 424 may call the requested encrypted function 426. Encrypted functions may not be directly called from plain-text code, as the code decryption may not be switched on. In instances where several different sections are utilized for encrypted code, each section may be adapted to require its own jump2crypted function 422 and run_crypted function 424. Notwithstanding, in step 408, after execution of the encrypted function 426, control may return to the run_crypted function 424. In step 410, the run_crypted function 424 may switch off code decryption and return control to jump2crypted function 422. In step 412, the jump2crypted function 422 may return control to the calling plain-text function 420.

In accordance with an embodiment of the invention, when a system is running under a secure mode, encrypted code that may be stored may be decrypted on the fly when executed. The code decryption utilized in a secure mode may be adapted to work on memory lines, for example, 32 byte wide memory lines. These memory lines may not contain data or plain-text code as it may result in incorrect code decryption during runtime. A tool, for example, a MetaWare™ tool may be utilized to separate plain-text code, encrypted code and data in the memory. A linker, for example, a MetaWare™ linker may be adapted to automatically allocate a required amount of memory for each type of code.

In order to enable/disable code decryption in a controlled manner, the sections(s) of memory containing encrypted code may be entered using a real time interrupt (rti) instruction. An encrypted function may be adapted to directly call other encrypted functions but may not be able to call plain-text functions. Code encryption may be performed in sections, wherein sections may be either encrypted or in plain text. The code may be encrypted but the data may not be encrypted. Encrypted code and data may not be mixed within the same memory line, for example, for 32 consecutive addresses starting at multiples of 32 as the data may be adapted to change during program execution and alter the code decryption. A branch instruction or an if instruction may be utilized instead of a switch instruction as the code may not be decrypted properly when using a switch instruction because a lookup table that may be required may be stored in a data cache instead of an instruction cache. Interrupts may be disabled while running encrypted code, as they may not switch on/off the code decryption properly. The jump2crypted function 422 may comprise suitable logic and/or code that may be adapted to disable any interrupts while the run_crypted function 424 may comprise suitable logic and/or code that may be adapted to restore a previous state of operation.

An array of constants within an encrypted code may not be encrypted, as they may be stored in a data register, for example. The array of constants may be replaced by a function, which may be adapted to return a value of the constant by accessing an index of the array of constants. The array of constants may then be encrypted by utilizing move or store commands to store immediate values of the constants.

A linker, for example, a metaware linker may be utilized to align the code according to the secure mode requirements. A separate section may be defined in a top-level code file for any code that may be encrypted. For example, the following code section may be inserted in a command file, which may generate a special memory area, for example, .crypt of a required size for the encrypted code.

.dontuse ALIGN(32) BLOCK(32) : {.=.+32;} > RAM

.crypt ? ALIGN(32) BLOCK(32) : {* (TYPE text)} > RAM

The memory area .crypt may be address aligned and may be generated if there is encrypted code. An unused memory line, for example, a 32 byte memory line may be generated between the end of the plain-text code and the encrypted code to prevent corrupting the code decryption. For example, C code that may be stored in the memory area .crypt may be selected by inserting it between a pragma, #pragma code(".crypt) and #pragma code(). A linker toggle, for example, each_function_in_its_own_section may be switched off when compiling modules containing encrypted code for the pragmas to take effect. In order to check if an encrypted code has been moved to an encrypted section, a driver option, for example, -Hldopt=-m may be utilized, which may generate a memory map of all the sections. A program, for example, a C program encrypt_code.c may be utilized to encrypt the code. The program may require a start address, an end address of the encrypted code in the memory and the memory content in binary format as arguments for the program.

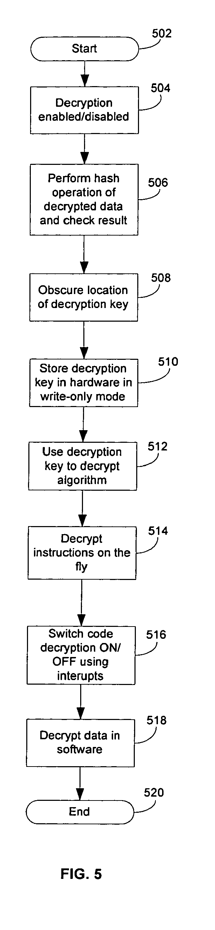

FIG. 5 is a flowchart illustrating exemplary steps for protecting data during mobile communication, in accordance with an embodiment of the invention. Referring to FIG. 5, exemplary steps may start at step 502. In step 504, the decryption of the plain-text code may be either enabled or disabled. In step 506, a hash operation of the plain-text code or decrypted data may be performed and the result may be checked to determine if the plain-text code was modified. In step 508, the location of the decryption key may be obscured. In step 510, the decryption key may be stored in hardware in a write-only mode or encrypted part of the code. In step 512, the decryption key may be utilized to decrypt the algorithm. In step 514, the instructions may be decrypted as they enter an instruction cache. The mobile multimedia processor (MMP) 101a (FIG. 1A) may be adapted to decrypt instructions for the encrypted algorithm as the instructions enter an instruction cache, for example, instruction cache block 306 (FIG. 3). In step 516, the code decryption may be switched ON/OFF using at least one interrupt. In step 518, the data may be decrypted in software. Control then passes to end step 520.

In accordance with an embodiment of the invention, a method and system for protecting data during mobile communication may comprise a mobile multimedia processor (MMP) 101a (FIG. 1A) that decrypts an encrypted algorithm in hardware. The mobile multimedia processor, for example, MMP 101a may be adapted to utilize the decrypted algorithm to decrypt data in software. The mobile multimedia processor (MMP) 101 a may be adapted to decrypt instructions for the encrypted algorithm as the instructions enter an instruction cache, for example, instruction cache block 306. The instruction cache block 306 (FIG. 3) may be adapted to store instructions temporarily for immediate access by the instruction fetch block 310. The data stored in the instruction cache block 306 may be256 bytes wide, for example. The mobile multimedia processor, for example, MMP 101a may be adapted to protect the decrypted data by performing a hash operation of the decrypted data and check a result of the hash operation.

The mobile multimedia processor, for example, MMP 101a may be adapted to store a decryption key to the encrypted algorithm in write-only mode in hardware. The mobile multimedia processor, for example, MMP 101a may be adapted to utilize the stored decryption key to decrypt the encrypted algorithm in hardware. The mobile multimedia processor, for example, MMP 101 a may be adapted to modify instructions in the encrypted algorithm. The mobile multimedia processor, for example, MMP 101a may be adapted to obscure a location of the stored decryption or DRM key. The mobile multimedia processor, for example, MMP 101 a may be adapted to disable at least one interrupt before the decryption of the encrypted algorithm. The mobile multimedia processor, for example, MMP 101a may be adapted to enable at least one interrupt after the decryption of the encrypted algorithm. The mobile multimedia processor, for example, MMP 101a may be adapted to insert an unused memory line between the decrypted data and the decrypted algorithm to prevent corruption of the decrypted data.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

**Claims**

1. A method for protecting data during mobile communication, the method comprising:

    decrypting an encrypted algorithm in hardware of a multimedia mobile processor; and
    utilizing said decrypted algorithm to decrypt data handled by said mobile multimedia processor in software.

2. The method according to claim 1, further comprising decrypting instructions for said algorithm as said instructions enter an instruction cache.

3. The method according to claim 1, further comprising:

    protecting said decrypted data by performing a hash operation of said decrypted data; and
    checking a result of said hash operation.

4. The method according to claim 1, further comprising storing a decryption key to said encrypted algorithm in write-only mode in said hardware of said mobile multimedia processor.

5. The method according to claim 4, further comprising utilizing said stored decryption key to decrypt said encrypted algorithm in said hardware of said mobile multimedia processor.

6. A machine-readable storage having stored thereon, a computer program having at least one code section for protecting data during mobile communication, the at least one code section being executable by a machine for causing the machine to perform steps comprising:

   decrypting an encrypted algorithm in hardware of a multimedia mobile processor; and
   utilizing said decrypted algorithm to decrypt data handled by said mobile multimedia processor in software.

7. The machine-readable storage according to claim 6, further comprising code for decrypting instructions for said algorithm as said instructions enter an instruction cache.

8. A system for protecting data during mobile communication, the system comprising:

   a mobile multimedia processor that decrypts an encrypted algorithm in hardware of said mobile multimedia processor; and
   said mobile multimedia processor utilizes said decrypted algorithm to decrypt data handled by said mobile multimedia processor in software.

9. The system according to claim 8, wherein said mobile multimedia processor decrypts instructions for said algorithm as said instructions enter an instruction cache.

10. The system according to claim 8, wherein:

   said mobile multimedia processor that protects said decrypted data by performing a hash operation of said decrypted data; and
   said mobile multimedia processor that checks a result of said hash operation.

105

Antenna 101d

RF 101e

BB 101f

TV 101h

PC 101k

Ext Cam 101m

Ext Mem 101n

Ext LCD 101p

LCD 101b

MMP 101a

Keypad 101c

Audio 101s

Camera 101g

105a

**FIG. 1A**

FIG. 1B

FIG. 2

FIG. 3

EP 1 691 314 A2

400

420

plain-text function

402

412

jump2crypted

404

422

410

424

run_crypted

406

408

encrypted function

426

Plain-text code

Encrypted code

FIG. 4

FIG. 5